# EUROPEAN PATENT APPLICATION

(11) **EP 2 391 123 A1**
(43) Date of publication of application: **30.11.2011**
(21) Application number: 11155983.7
(22) Date of filing: 25.02.2011
(51) Int. Cl.: H04N 5/76, G06F 3/048, H04N 5/445

(54) **Digital broadcast receiver and recorded program display method**

(30) Priority: 31.05.2010 JP 2010125172
(71) Applicant: Kabushiki Kaisha Toshiba, Tokyo (JP)
(72) Inventor: Yoshida, Shingo, Tokyo (JP)
(74) Representative: HOFFMANN EITLE

(57) **Abstract**

According to one embodiment, a digital broadcast receiver includes: a recorder configured to record programs of a record-designated channel for plural record-designated time zones; an adjacent program information receiving unit configured to receive, in a same channel as a currently-reproduced recorded program, program information of a recorded program previous to the currently-reproduced recorded program, and program information of a recorded program subsequent to the currently-reproduced recorded program; and a displaying unit configured to place, wholly or partially on a screen, program information of the currently-reproduced recorded program in a center, the program information of the previous recorded program in an upper side, and the program information of the subsequent recorded program in a lower side.

## Description

### CROSS-REFERENCE TO RELATED APPLICATION(S)

This application is based upon and claims the benefit of priority from Japanese Patent Application No. 2010-125172, filed on May 31, 2010, the entire contents of which are incorporated herein by reference.

### FIELD

Embodiments described herein relate generally to a digital broadcast receiver which can record a program that is received through a digital broadcast, and a recorded program display method.

### BACKGROUND

Recently, terrestrial/BS/CS digital broadcast become widespread so that many programs can be watched at high image/sound quality. A digital broadcast is provided with an EPG (Electronic Program Guide). For example, a program list of one week ahead is displayed with the program contents such as the broadcast time and the cast so as to allow the user to perform information search and viewing and recording reservations of a program.

As the number of channels increases, the user may wish to watch a lot more programs, and the broadcast times thereof may be overlapped sometimes. Therefore, the user often recorded programs, and then the recorded programs are watched. A digital broadcast receiver which can simultaneously recorded programs of plural channels by using plural tuners and a recording device having a relatively large recording capacity is available in the market (see JP-2001-186472-A, for example).

In a digital broadcast receiver having plural tuners and incorporating (or connected with) an internal (or external) video recording device of a relatively large recording capacity, programs of plural channels can be simultaneously subjected to continuous recording, and a desired one of many recorded programs can be selected to be reproduced.

For example, a program list of recorded programs may be displayed in a similar manner as a program list in a newspaper. While viewing such program list, the user may select a desired recorded program to be viewed, by operating a cursor button and an enter button of a remote controller. During when thus-selected recorded program is viewed, when the user wishes to view another recorded program, the program list of recorded programs is again displayed, and the other recorded program is similarly selected by the remote controller.

Since a large amount of program information of the recorded programs is displayed as a program list of recorded programs at one time, the process load is large, and a prolonged time period is required for the display on a screen. Therefore, during when a recorded program is reproduced, it is difficult to simultaneously display a program list of recorded programs. Even in the case of a mini program list in which numbers of recorded programs and channels to be displayed are reduced, the load for collecting and displaying program information is still large.

To view another recorded program during when a recorded program is reproduced, a program list or mini program list of recorded programs should be displayed, and the user should select the other recorded program by the cursor button and the enter button of the remote controller. Therefore, not only the operation is cumbersome, but also a considerable processing time is required, thereby making it difficult to display the other recorded program within a short time.

In usual viewing of broadcasted television programs, the user is allowed to directly select a program by operating a channel button of a remote controller, or to perform zapping by using a channel up/down button. However, since all channels/programs are not recorded, during reproducing a recorded program, it is difficult to realize zapping of recorded programs by using the channel button or channel up/down button of the remote controller. Further, as described above, selection through a program list of recorded programs requires plural operations and a display time. Therefore, zapping of recorded programs is hardly realized.

### SUMMARY

One object of the invention is to provide a digital broadcast receiver and recorded program display method which allow the user, during when a recorded program is reproduced, to easily reproduce another recorded program.

According to one embodiment, there is provided a digital broadcast receiver, including: a recorder configured to record programs of a record-designated channel for plural record-designated time zones; an adjacent program information receiving unit configured to receive, in a same channel as a currently-reproduced recorded program, program information of a recorded program previous to the currently-reproduced recorded program, and program information of a recorded program subsequent to the currently-reproduced recorded program; and a displaying unit configured to place, wholly or partially on a screen, program information of the currently-reproduced recorded program in a center, the program information of the previous recorded program in an upper side, and the program information of the subsequent recorded program in a lower side.

Further, there is also provided a digital broadcast receiver, including: a recorder configured to record programs of plural record-designated channels for a record-designated time zone; an adjacent program information receiving unit configured to receive, in a same time zone as a currently-reproduced recorded program, program information of a recorded program having a channel number smaller than a channel of the currently-reproduced recorded program, and program information of a recorded program having a channel number larger than the channel of the currently-reproduced recorded program; and a displaying unit configured to place, wholly or partially on a screen, program information of the currently-reproduced recorded program in a center, the program information of the recorded program having the smaller channel number in a left side, and the program information of the recorded program having the larger channel number in a right side.

Still further, there is also provided a recorded program display method, including: recording programs of plural record-designated channels for plural record-designated time zones; receiving, in a same channel as a currently-reproduced recorded program, program information of a recorded program previous to the currently-reproduced recorded program, and program information of a recorded program subsequent to the currently-reproduced recorded program; receiving, in a same time zone as the currently-reproduced recorded program, program information of a recorded program having a channel number smaller than a channel of the currently-reproduced recorded program, and program information of a recorded program having a channel number larger than the channel of the currently-reproduced recorded program; and placing, wholly or partially on a screen, program information of the currently-reproduced recorded program in a center, the program information of the previous recorded program in an upper side, the program information of the subsequent recorded program in a lower side, the program information of the recorded program having the smaller channel number in a left side, and the program information of the recorded program having the larger channel number in a right side.

### BRIEF DESCRIPTION OF THE DRAWINGS

A general architecture that implements the various feature of the present invention will now be described with reference to the drawings. The drawings and the associated descriptions are provided to illustrate embodiments of the present invention and not to limit the scope of the present invention.

Fig. 1 illustrates a block diagram of a digital broadcast receiver 1 of an embodiment.

Fig. 2 illustrates. a remote controller according to an embodiment.

Fig. 3 exemplarily illustrates a program list displayed on a screen.

Fig. 4 exemplarily illustrates recorded channels and time zones.

Fig. 5 exemplarily illustrates a program list of recorded programs which is displayed on the screen.

Fig. 6 exemplarily illustrates an adjacent program display which is displayed on the screen.

Fig. 7 illustrates in detail the adjacent program display.

Fig. 8 illustrates in detail the adjacent program display after the reproduced program is switched in the state of the adjacent program display shown in Fig. 7.

Fig. 9 exemplarily illustrates an operation flow of an adjacent program displaying process.

Fig. 10 exemplarily illustrates channels and time zones in the case where two channels are recorded.

Fig. 11 exemplarily illustrates a program list of recorded programs in the case where two channels are recorded.

Fig. 12 exemplarily illustrates the adjacent program display in the case where the number of channels of recorded programs is two.

Fig. 13 exemplarily illustrates an adjacent program display in Embodiment 2.

Fig. 14 exemplarily illustrates an adjacent program display in Embodiment 3.

Fig. 15 exemplarily illustrates an adjacent program display in Embodiment 4.

### DETAILED DESCRIPTION

In general, according to one embodiment, a digital broadcast receiver includes: a recorder configured to record programs of a record-designated channel for plural record-designated time zones; an adjacent program information receiving unit configured to receive, in a same channel as a currently-reproduced recorded program, program information of a recorded program previous to the currently-reproduced recorded program, and program information of a recorded program subsequent to the currently-reproduced recorded program; and a displaying unit configured to place, wholly or partially on a screen, program information of the currently-reproduced recorded program in a center, the program information of the previous recorded program in an upper side, and the program information of the subsequent recorded program in a lower side.

Hereinafter, embodiments will be described with reference to the drawings.

(Embodiment 1)

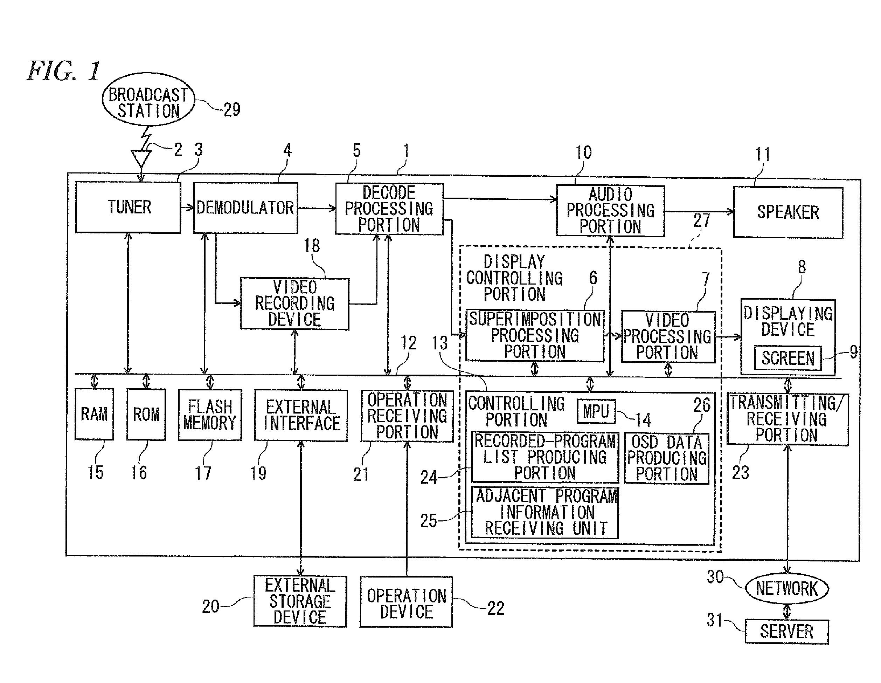

Fig. 1 illustrates a block diagram of a digital broadcast receiver 1 of an embodiment. An antenna 2 receives a broadcast radio wave transmitted from a broadcast station 29, in a terrestrial digital broadcast or a satellite digital broadcast.

A tuner 3 selects a broadcast signal of a desired channel from broadcast signals of the terrestrial digital broadcast or the satellite digital broadcast. The tuner 3 includes plural tuner units to simultaneously receive plural broadcasts.

A demodulator 4 demodulates the broadcast signal in accordance with the modulation system of the corresponding digital broadcast. The signal is demodulated to an MPEG (Moving Picture Experts Group)-TS (Transport stream) by the OFDM (Orthogonal Frequency Division Multiplexing) demodulation in the case of a terrestrial digital broadcast signal, or by the PSK (Phase Shift Keying) demodulation in the case of a satellite digital broadcast signal, and then supplied to a decode processing portion 5.

The decode processing portion 5 has functions of an MPEG decoder, a video audio decoder, and the like. The decode processing portion 5 divides MPEG-TS data transmitted from the demodulator 4, into sections, and decodes data of program information. The decode processing portion converts a video PES (Packetized Elementary Stream) into a video ES (Elementary Stream), and an audio PES into an audio ES, and then decodes the video data and audio data. Furthermore, the decode processing portion 5 decodes reproduction data from a video recording device 18.

A superimposition processing portion 6 performs the plane management on the video data supplied from the decode processing portion 5, a data broadcast transferred through a bus 12, and a window drawing by an OSD data producing portion 26, to conduct superimposition of the data with respect to the video data, and sends the resulting signal to a video processing portion 7.

The video processing portion 7 converts the signal to the format (the pixel number, the frame frequency, and the scanning method) compatible with a displaying device 8, arbitrarily adjusts the display color, and then supplies the resulting signal to the displaying device 8 to display a video image on a screen 9.

An audio processing portion 10 converts the digital audio data supplied from the decode processing portion 5, to an analog audio signal which can be reproduced by a speaker 11, and then supplies the analog audio signal to the speaker 11 to reproduce the sound. The displaying device 8 and the speaker 11 may be disposed outside the digital broadcast receiver 1, or may be housed in a case other than a case of the digital broadcast receiver 1.

In the digital broadcast receiver 1, a controlling portion 13 generally controls the whole operations including the above-described receiving operation. The controlling portion 13 has an MPU (Micro Processing Unit) 14, and controls the components connected thereto through a bus 12.

A RAM (Random Access Memory) 15 is a read/write memory which stores various data for the data processing of the controlling portion 13, and functions as a buffer memory which stores video data and the like. A ROM (Read Only Memory) 16 is a read only memory which stores control programs to be executed by the MPU 14, and the like.

A flash memory 17 is a rewritable nonvolatile semiconductor memory, in which data are not erased even when power is switched off. The flash memory 17 has a function of storing recorded program information, record reservation information, and the like.

The video recording device 18 is a recorder, such as an HDD (Hard Disk Drive), an SSD (Solid State Drive), an ODD (Optical Disc Drive), or the like. In the video recording device 18, an encoder and decoder for recording and reproducing information onto and from the recording device are mounted, and the MPEG-TS data are modulated through the encoder and the decoder to the format suitable for recording and reproducing, and recorded or reproduced onto or from the HDD, the SSD, or the ODD. Reproduced data are decoded by the decode processing portion 5.

An external interface 19 is an interface such as USB (Universal Serial Bus), IEEE 1394 (Institute of Electrical and Electronic Engineers 1394), eSATA (external Serial ATA (AT Attachment)), an SD (Secure Digital) (registered trademark) memory card, or the like, and an external storage device 20 including a drivers and the like, such as a USB memory, a USB external device, an SD memory card, an HDD, an SSD, a CD-R/RW, or a DVD writer is connected as an external recorder to the external interface. A broadcast program can be recorded into the external storage device 20 through the external interface 19. The user can select which of the video recording device 18 or the external storage device 20 is used for recording a program.

An operation receiving portion 21 receives an operation signal transmitted from an operation device 22, and transfers the signal to the controlling portion 13. For example, the operation device 22 is a remote controller using an infrared ray, Bluetooth, etc. or a wired or wireless keyboard, and sends an operation signal. The operation receiving portion 21 receives the operation signal from such remote controller or a keyboard, etc.

The digital broadcast receiver 1 is connected to a network 30 such as the Internet through a transmitting/receiving portion 23. Thus, the digital broadcast receiver 1 is communicable with an apparatus such as a server 31 on the network 30 through the transmitting/receiving portion 23.

The controlling portion 13 includes a recorded-program list producing portion 24, an adjacent program information receiving unit 25, and an OSD data producing portion 26. These components may be realized by applications executed by the MPU 14. Such applications may be stored in the ROM 16, and read by the MPU 14 to be executed as needed.

The digital broadcast receiver 1 has the plural tuners 3, and can perform recording designation of simultaneous and continuous recording on plural programs. The recorded-program list producing portion 24 produces a recorded-program list of plural channels which are record-designated by the user, and record-designated times.

The user can, while viewing the EPG-based program list displayed on the screen 9, select a program, and record the program or reserve recording of the program. As the number of channels is growing, the EPG is provided in order to facilitate the user to select a program. The EPG is displayed on the screen 9 of the displaying device 8 of the digital broadcast receiver 1, in a similar manner as a television program list in a newspaper etc. While viewing the program list on the screen 9, the user uses the program list for selecting a program, displaying detailed information, and reserving recording, by using the remote controller.

The manner of displaying such EPG-based program list is different depending on the manufacturer and kind of the broadcast receiver. In the digital broadcast receiver 1, similarly with the television program list in the newspaper etc., the program list is displayed so that the channel axis is set in the lateral direction, the time axis is set in the vertical direction, and programs which are to be broadcasted after the current time are arranged. When a program is selected, the title, and broadcast date and time of the program are displayed, and also detailed information such as the genre, cast and contents of the program are additionally displayed.

Similarly with the video image and the sound, the EPG data are packetized, and transmitted while multiplexed. Data of program information are contained in the EIT (Event Information Table) of the SI (Service Information). The controlling portion 11 analyzes the information supplied from the signal processing portion 4, and produces a program list. The produced program list is displayed on the screen 9 by a display controlling portion 27 which includes the superimposition processing portion 6, the video processing portion 7, and the controlling portion 13.

The adjacent program information receiving unit 25 receives, in the same channel, program information (for example, meta information) of a recorded program that is closest and previous on the time axis to the currently-reproduced recorded program, and also program information of a recorded program that is closest and subsequent on the time axis to the currently-reproduced recorded program. Moreover, the adjacent program information receiving unit 25 detects whether program information of a recorded program that is further previous to the previous recorded program exists or not, and further detects whether program information of a recorded program that is further subsequent to the subsequent recorded program exists or not.

Furthermore, the adjacent program information receiving unit 25 receives, in the same time zone, program information (for example, meta information) of a recorded program that has a channel number closest to and smaller than the channel of the currently-reproduced recorded program, and also program information of a recorded program that has a channel number closest to and larger than the channel of the currently-reproduced recorded program. Furthermore, the adjacent program information receiving unit 25 detects whether program information of a recorded program that has, in the same time zone, a channel number further smaller than the recorded program having the small channel number exists or not, and further detects whether program information of a recorded program that has, in the same time zone, a channel number further larger than the recorded program having the large channel number exists or not.

The OSD data producing portion 26 produces OSD (On Screen Display) data. The produced OSD data are transmitted to the superimposition processing portion 6 through the bus 12. The OSD data sent to to the superimposition processing portion 6 are subjected to a process of being superimposed on video data, or processed as an OSD single screen, and then transmitted to the video processing portion 7 to be displayed on the screen 9.

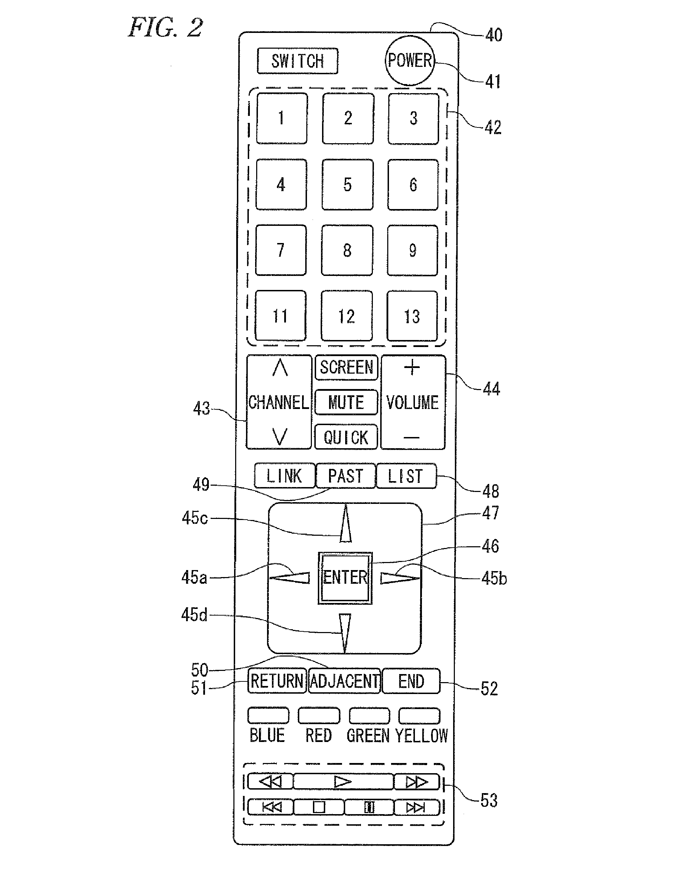

Fig. 2 illustrates a remote controller 40 according to an embodiment. The remote controller 40 sends the operation signal to the operation receiving portion 21 of the digital broadcast receiver 1 by using wireless communication based on an infrared ray, Bluetooth, or the like. A power source button 41 turns ON or OFF of the power source of the digital broadcast receiver 1. Specifically, the button changes the digital broadcast receiver 1 from a waiting state to an operating state or from the operating state to the waiting state.

Channel buttons 42 having numbers of 1 to 12 are used to directly select the channel number. A channel up/down button 43 is used to forwardly or rearwardly select the channel number. A volume adjusting button 44 is used to adjust the volume when viewing a program.

Cursor buttons 45a to 45d are used to move cursors in various information windows of a GUI screen displayed on the screen 9 of the displaying device 8, and selection buttons of various items. A left cursor button 45a is used to leftward move the cursor. A right cursor button 45b, an up cursor button 45c, and a down cursor button 45d are used to move the cursor leftward, upward, and downward, respectively. An enter button 46 is used to execute a button at the cursor's position on the screen.

The cursor or the object to be selected can be moved by touching the surface of a touch pad portion 47 with the finger tip and by sliding the finger tip over the surface. By obliquely sliding the finger tip, the cursor or the object to be selected also can be moved obliquely.

A program list button 48 is dedicated to causing a program list (EPG screen) to be displayed on the screen 9. A past-program list button 49 is dedicated to causing a recorded-program list of recorded programs to be displayed on the screen 9.

An adjacent program button 50 is dedicated to displaying an adjacent program display during when a recorded program is reproduced. During when the recorded program is reproduced, by using the button, displaying program information in a cross like arrangement so that program information of the previous/subsequent recorded programs are vertically arranged while program information of the other reproducible recorded programs having the other channel numbers in the same time zone are laterally arranged.

A return button 51 is operated to return to the previous state after the cursor is moved by the cursor buttons 45, or after the setting is changed. An end button 52 is operated to end a series of operations. Recording device operating devices 53 are buttons for, when a program recorded in the video recording device 18 is viewed, performing reproduction, stop, pause, fast forward reproduction, fast rewind production, skip to next program, return to top, and skip to previous program.

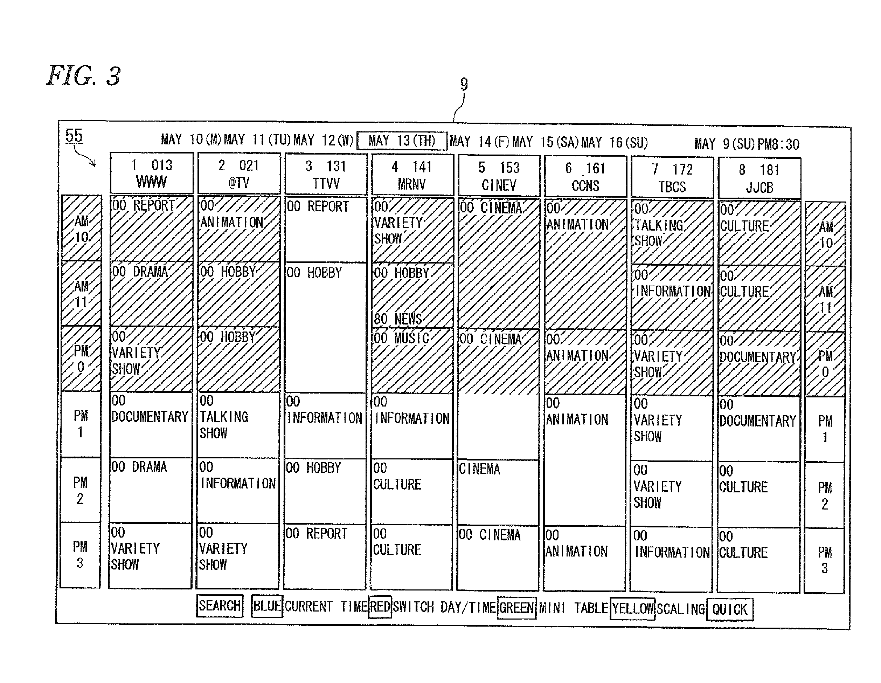

Fig. 3 exemplarily illustrates an EPG-based program list 55 displayed on the screen 9. In Fig. 3, at May 9 AM 08:30, eight channels or channels 1 to 8 are displayed with respect to a time zone of six hours from May 13 (Th) AM 10:00 to PM 03:59. The time zone and/or the channels can be changed by moving the cursor.

While viewing the program list 55, the user can designate recording by designating plural channels and plural time zones. In Fig. 3, an example in which programs of channels 1, 2, and 4 to 8 of the time zone of three hours from May 13 (Th) AM 10:00 to PM 01:00 are record-designated is shown. With respect to the record-designated time zone and channels, the background color is changed (the hatched portions) for the user's recognition. Similarly, reservation of other programs may be designated while changing the time and date, the time zone, and the channels.

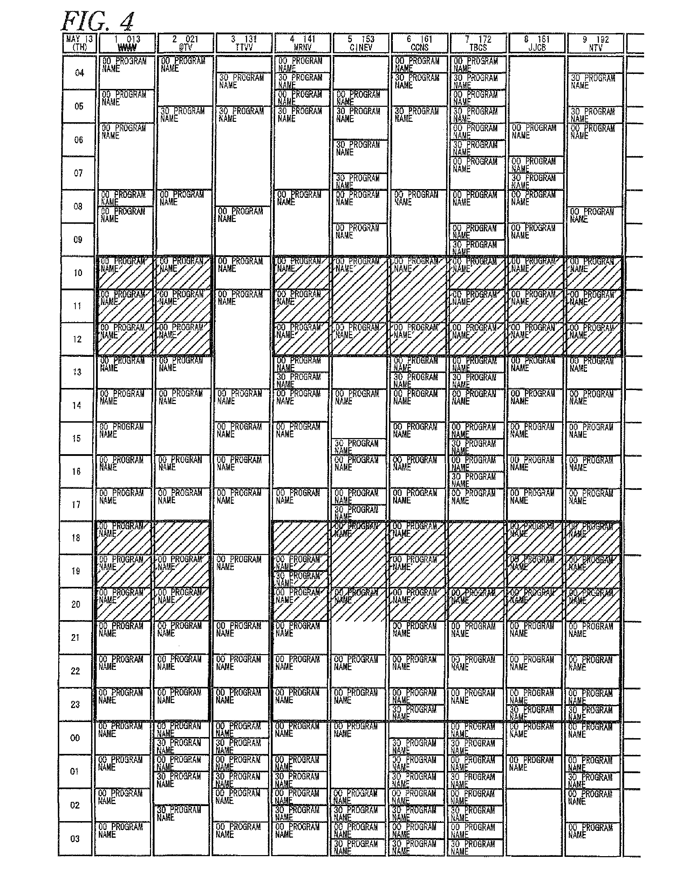

Fig. 4 exemplarily illustrates recorded channels and time zones. In Fig. 4, it is exemplarily shown that programs of channels 1, 2, and 4 to 9 of the time zone of three hours from May 13 AM 10:00 to PM 01:00 are recorded, and further programs of channels 1, 2, and 4 to 9 of the time zone of six hours from PM 6:00 to AM 00:00 of the next day are recorded. The time zones and the channels are shown by portions surrounded with a thick line. In Fig. 4, each program name is omitted for the sake of simplicity.

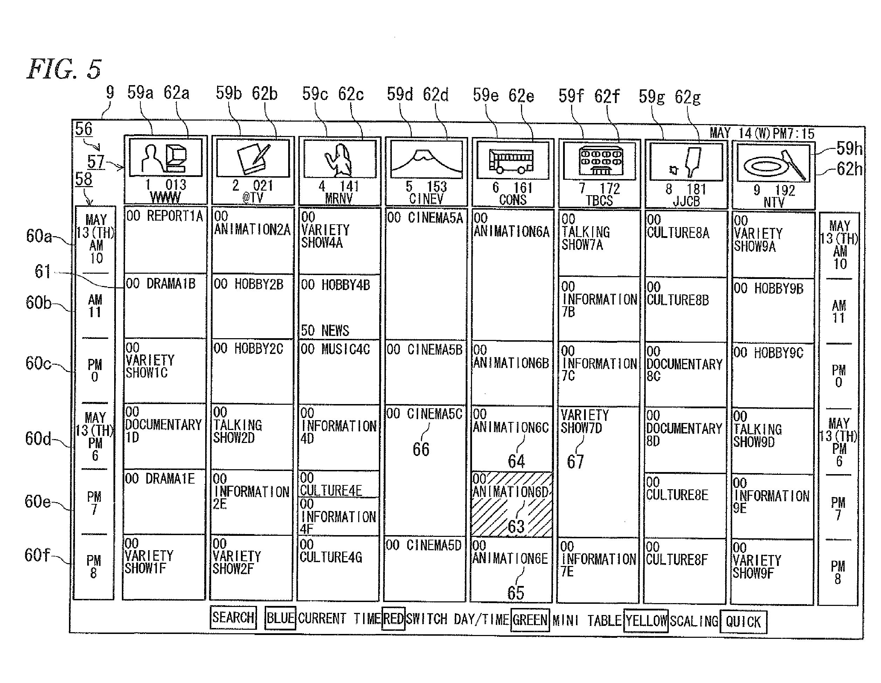

Fig. 5 exemplarily illustrates a program list of recorded programs which is displayed on the screen 9 of the displaying device 8. A recorded-program list 56 may be displayed on a substantially whole of the screen 9, or a part of the recorded-program list may be displayed on a designated range in the screen 9. In Fig. 5, the list is displayed on a substantially whole of the screen 9. The recorded-program list 56 is produced by the recorded-program list producing portion 24, and displayed on the screen 9 by the display controlling portion 27. When the past-program list button 49 of the remote controller 40 is pressed, the recorded-program list 56 is displayed on the screen 9.

For example, in the recorded-program list 56, as in the EPG-based program list, the channel axis 57 indicating a channel is set in the lateral direction of the screen 9, and the time axis 58 indicating the time is set in the vertical direction. The program list 55 displays the whole channels which can be received by the digital broadcast receiver 1, and the continuous time period after the current time. On the other hand, the recorded-program list 56 displays recorded programs in the plural record-designated channels and the record-designated time zone.

In Fig. 5, the record-designated channels are displayed on the channel axis 57, or channel display portions 59a to 59h for eight channels are displayed. When a cursor button of the remote controller is operated, the screen is scrolled right or left to allow the user to view other channels which are not displayed on the screen 9.

In Fig. 5, the hatched portions in the portions which are surrounded respectively by the thick lines in Fig. 4 are displayed. The record-designated times are displayed on the time axis 58. Time display portions 60a to 69f for six hours are displayed. The time display portion 60a indicates a one-hour time zone from May 13 AM 10:00 to AM 11:00, the time display portion 60b indicates a one-hour time zone from May 13 AM 11:00 to PM 00:00, and the time display portion 60c indicates a one-hour time zone from May 13 PM 00:00 to PM 01:00, so that the time display portions 60a to 60c indicate a three-hour continuous time zone. The time display portion 60d indicates a one-hour time zone from May 13 PM 06:00 to PM 07:00, the time display portion 60e indicates a one-hour time zone from May 13 PM 07:00 to PM 08:00, and the time display portion 60f indicates a one-hour time zone from May 13 PM 08:00 to PM 09:00. When a cursor button of the remote controller is operated, the screen is scrolled up or down to allow the user to view other channels which are not displayed on the screen 9. The time axis 56 is displayed also in the right side of the screen.

In Fig. 5, in order to simplify the drawings, only the genre names of programs are described in portions of the area of a program display portion 61. Practically, the name of a recorded program and brief introduction of the program are described for each channel and time. The description contents are identical with those in the case of display of an EPG-based program list. When a program is to be recorded, also EPG-based program information data are simultaneously recorded, and used in the production of the recorded-program list 56 in the recorded-program list producing portion 24.

In Fig. 5, thumbnail display portions 62a to 62h are displayed in the channel display portions 59a to 59h. A thumbnail is a reduced-size image for displaying many images in a list. The image is a motion image or a still image. Thumbnails of recorded programs of channels in the same time zone as the program which is selected in the recorded-program list 56 by the user (for example, a program 63 (channel 6, the time zone of PM 07:00, and the hatched portion)) are displayed in the thumbnail display portions 62a to 62h.

When the user wishes to view a recorded program, the user presses the past-program list button 49 of the remote controller 40 to display the recorded-program list 56 on the screen 9, operates the cursor buttons 45a to 45d to select the recorded program, and then presses the enter button 46 to view the desired recorded program. In the case where the user wishes to view another recorded program, the user must press the past-program list button 49 during when the program is viewed, to again display the recorded-program list 56, and conduct the operation in a similar manner.

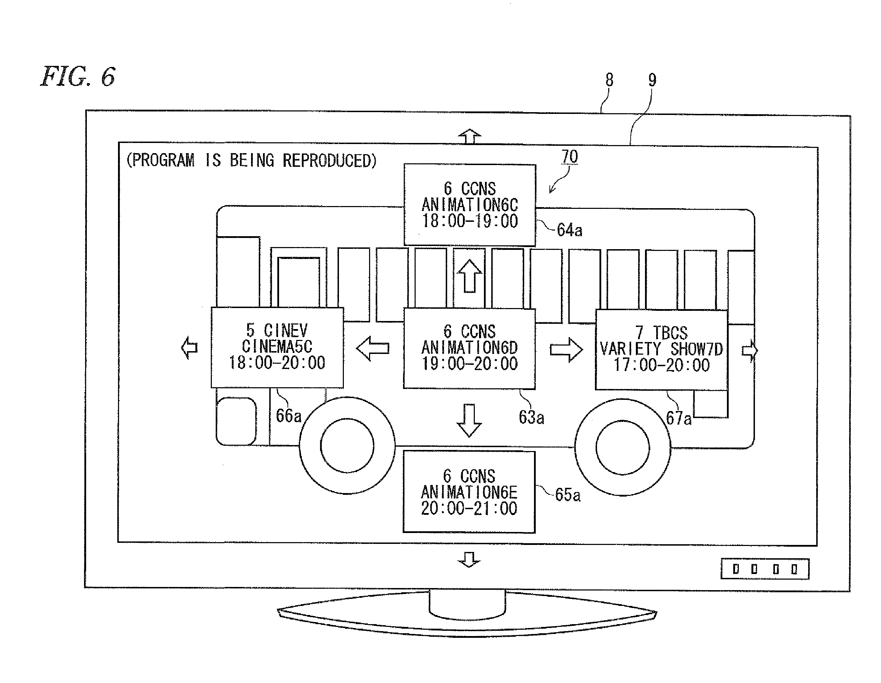

Fig. 6 exemplarily illustrates an adjacent program display which is displayed on the screen 9. During when a recorded program is reproduced, the user presses the adjacent program button 50 of the remote controller 40, or one of the cursor buttons 45a to 45d, whereby the adjacent program display 70 can be displayed on the screen. In Fig. 6, the adjacent program display 70 is displayed at the middle of the screen 9. Alternatively, the whole size of the adjacent program display 70 may be reduced so as to be displayed at, for example, a left lower portion or right lower portion of the screen.

It is assumed that the currently-reproduced program is the program 63 in Fig. 5. In Fig. 6, program information 63a (for example, the name of station, the name of the program, the broadcasting time, and the like) of the program 63 is placed in a center portion of the adjacent program display 70 while being highlighted. Program information 64a of a program 64 is placed above the program information 63a, program information 65a of a program 65 is placed below the program information 63a, and program information 66a of a program 66 is placed on the left side of the program information 63a. Therefore, the sets of program information are arranged in a cross like manner so that the program information 63a of the currently-reproduced program 63 is placed in the center.

In the state where the adjacent program display 70 is displayed, when the user presses the left cursor button 45a, for example, the reproduced program on the screen 9 is switched to the program 66. When one of the cursor buttons 45a to 45d is pressed, the program in the pressed direction is reproduced.

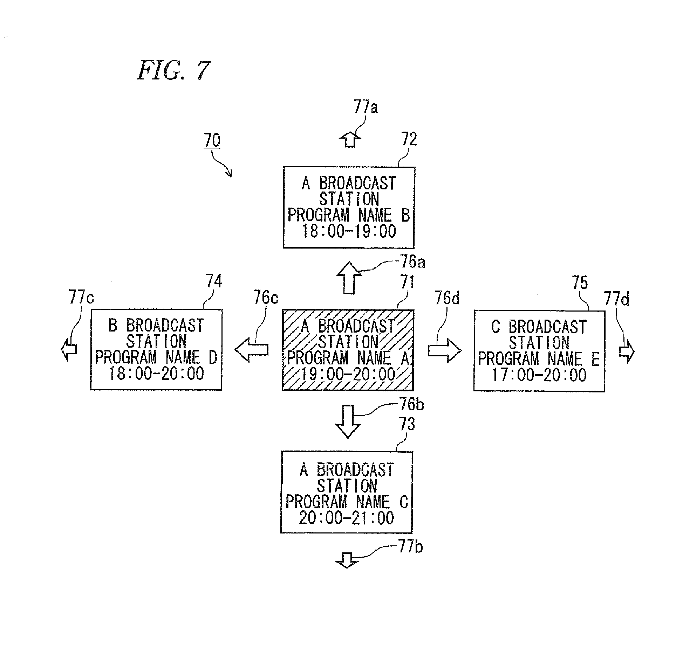

Fig. 7 illustrates in detail the adjacent program display 70. The adjacent program display 70 is displayed in a part of the screen 9 while program information 71 (for example, the name of station, the name of the program, the broadcasting time, and the like) of the currently-reproduced recorded program is placed in the center, program information 72 of a recorded program (time adjacent program) that is, in the same channel, closest and previous on the time axis to the currently-reproduced recorded program is placed in the upper side, and program information 73 of a recorded program (time adjacent program) that is, in the same channel, closest and subsequent on the time axis to the currently-reproduced recorded program is placed in the lower side.

Furthermore, the adjacent program display 70 is displayed in the part of the screen 9 while the program information 71 of the currently-reproduced recorded program is placed in the center, program information 74 of a recorded program (channel adjacent program) that has, in the same time zone, a channel number closest to and smaller than the channel of the currently-reproduced recorded program is placed in the left side, and program information 75 of a recorded program (channel adjacent program) that has, in the same time zone, a channel number closest to and larger than the channel of the currently-reproduced recorded program is placed in the right side.

Marks 76a to 76d indicating that the reproduced program is changeable are displayed in spaces between the program information 71 and the program information 72 to 75, respectively. In the case where program information of a recorded program that is further previous to the recorded program of the program information 72 exists, a mark 77a indicating that a further previous recorded program exists is displayed above the program information 72. In the case where program information of a recorded program that is further subsequent to the recorded program of the program information 73 exists, similarly, a mark 77b indicating that a further subsequent recorded program exists is displayed below the program information 73.

In the case where program information of a recorded program having a channel number further smaller than the recorded program of the program information 74 exists, a mark 77c indicating that a recorded program having a further smaller channel number exists is displayed on the left side of the program information 74 of the recorded program having the smaller channel number.

In the case where the number of channels of recorded programs is three or more, the channel numbers can be cyclically displayed. In the case where program information of a recorded program having a channel number further smaller than the recorded program of the program information 74 does not exist, a mark 77c indicating that program information having the largest channel number exists is displayed.

In the case where program information of a recorded program having a channel number further larger than the recorded program of the program information 75 exists, a mark 77d indicating that a recorded program having a further larger channel number exists is displayed on the right side of the program information 75 of the recorded program having the larger channel number.

In the case where the number of channels of recorded programs is three or more, the channel numbers can be cyclically displayed. In the case where program information of a recorded program having a channel number further larger than the recorded program of the program information 75 does not exist, a mark 77d indicating that program information having the smallest channel number exists is displayed.

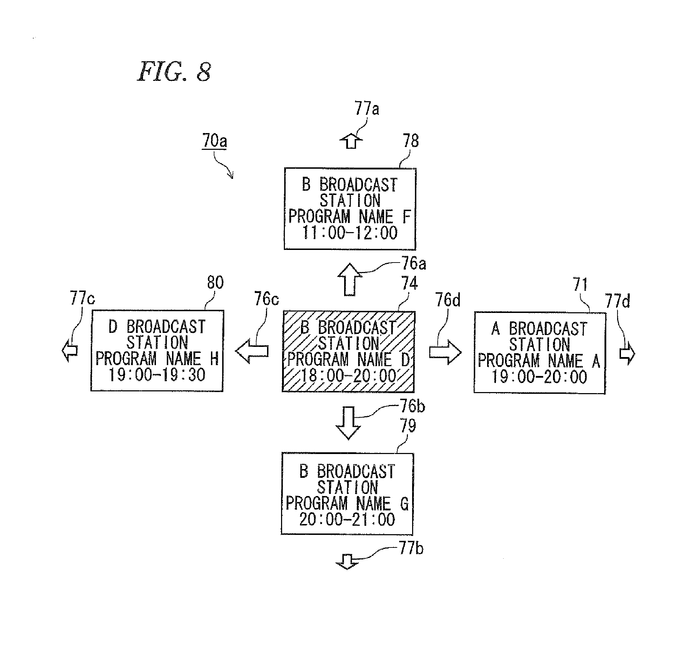

Fig. 8 illustrates in detail an adjacent program display 70a after the reproduced program is switched in the state of the adjacent program display 70 shown in Fig. 7. In the adjacent program display 70 shown in Fig. 7, when the left cursor button 45a is pressed, the reproduced program is switched from the program name A of a broadcast station A to the program name D of a broadcast station B. Immediately after the changing to the program name D of the broadcast station B, the adjacent program display is switched to the adjacent program display 70a shown in Fig. 8. Since the reproduced program is the program name D of the broadcast station B, the program information in the center is switched to the program information 74, and that in the upper side is switched to program information 78 of a recorded program that is transmitted from the broadcast station B and that is closest and previous on the time axis to the currently-reproduced recorded program. Similarly, the program information in the lower side is switched to program information 79. As the program information in the left side, program information 80 of a recorded program that is in the same time zone as the program name D of the broadcast station B and that has a channel number closest to and smaller than the channel of the broadcast station B is displayed.

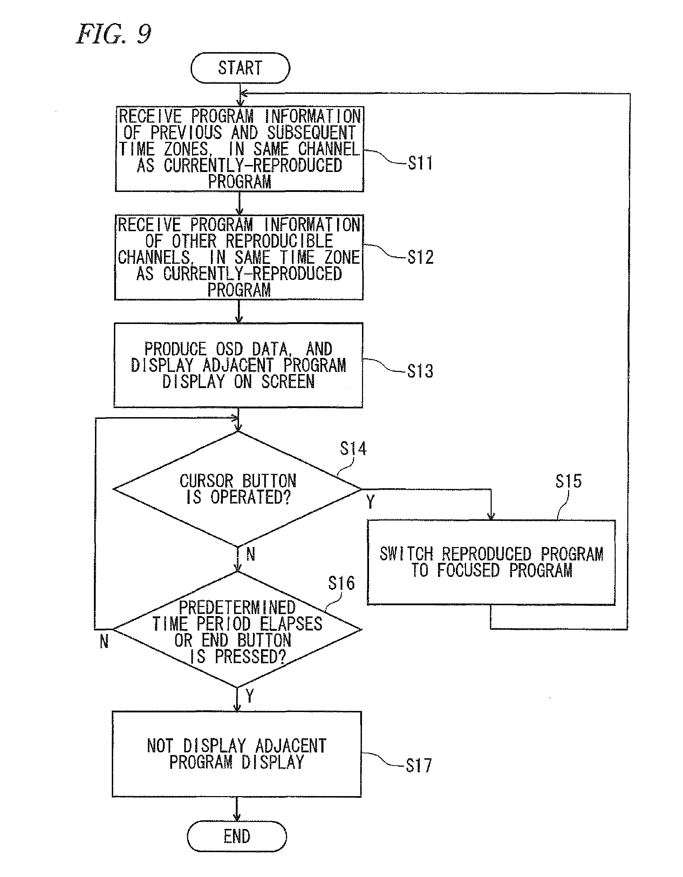

Fig. 9 exemplarily illustrates an operation flow of an adjacent program displaying process. When the user presses the adjacent program button 50 of the remote controller 40 during reproduction of a recorded program, or when the user presses one of the cursor buttons 45a to 45d, the controlling portion 13 detects the pressing, and starts the adjacent program displaying process.

In S11, from record information recorded in the recording device 18, the adjacent program information receiving unit 25 receives program information of the recorded program (time adjacent program) that is, in the same channel, closest and previous on the time axis to the currently-reproduced recorded program, program information of the recorded program (time adjacent program) closest and subsequent on the time axis to the currently-reproduced recorded program, and meta information of the recorded program. The adjacent program information receiving unit 25 detects whether a recorded program that is further previous to the previous recorded program exists or not, and further detects whether a recorded program that is further subsequent to the subsequent recorded program exists or not.

In S12, the adjacent program information receiving unit 25 receives program information of the recorded program (channel adjacent program) that has, in the same time zone, a channel number closest to and smaller than the channel of the currently-reproduced recorded program, program information of the recorded program (channel adjacent program) that has, in the same time zone, a channel number closest to and larger than the channel of the currently-reproduced recorded program, and meta information of the recorded program. The adjacent program information receiving unit 25 detects whether a recorded program that has, in the same time zone, a channel number further smaller than the recorded program of the small channel number exists or not, and further detects whether a recorded program that has, in the same time zone, a channel number further larger than the recorded program of the large channel number exists or not.

In S13, the OSD data producing portion 26 produces OSD data of the adjacent program display 70 based on the meta information of the recorded program which is received by the adjacent program information receiving unit 25. The display controlling portion 27 displays the OSD data of the adjacent program display 70 on the screen 9.

The adjacent program information receiving unit 25 is required only to search and receive program information of a maximum total of four adjacent programs with respect to the currently-reproduced recorded program, or i.e., two time adjacent programs at a maximum, and two channel adjacent programs at a maximum, and therefore can receive meta information for a short time period. Since the amount of information to be displayed is small, the OSD data producing portion 26 can produce the OSD data of the adjacent program display 70 for a short time period. When the user presses the adjacent program button 50 of the remote controller 40, or when the user presses one of the cursor buttons 45a to 45d, therefore, the adjacent program display 70 can be displayed for a relatively short time period.

In S14, the controlling portion 13 determines whether one of the cursor buttons 45a to 45d is pressed or not. If one of the cursor buttons 45a to 45d is pressed, the recorded program of the program information in the pressed direction is reproduced, and the process returns to S11. In order to switch the reproduced program, the user is requested only to press the cursor button in the direction of the program to which the reproduced program is to be switched.

In S16, if one of the cursor buttons 45a to 45d is not pressed and a predetermined time period elapses or the end button is pressed, the display of the adjacent program display 70 is stopped, and the process is ended.

As in the above-described embodiment, when the user presses the adjacent program button 50 of the remote controller 40, or one of the cursor buttons 45a to 45d during reproduction of a recorded program, the adjacent program display 70 is superimposedly displayed on the reproduction screen of the program, and the reproduced program can be switched simply by pressing the cursor button in the direction of the program to which the reproduced program is to be switched. After the program is switched, the adjacent program display 70 is switched to an adjacent program display in which the switched-over recorded program is placed in the center. Therefore, the user can continuously switch the program by operating the cursor buttons 45a to 45d. Recorded programs can be viewed in a manner similar to the zapping, and another recorded program can be easily reproduced.

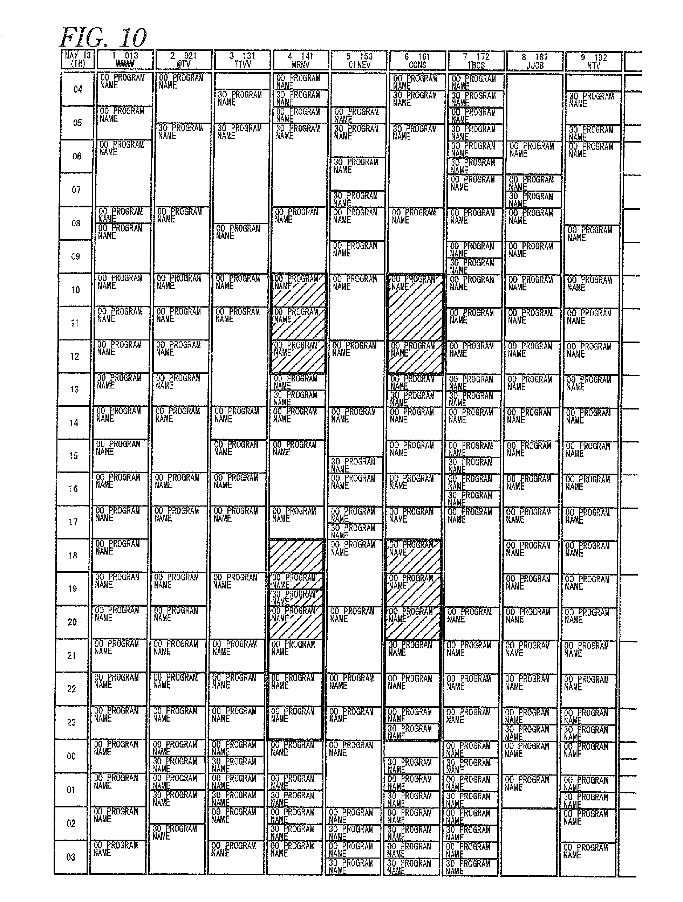

Fig. 10 exemplarily illustrates channels and time zones in the case where two channels are recorded. In Fig. 10, programs of channels 4 and 6 are recorded with respect to three hours from May 13 AM 10:00 to PM 01:00. Furthermore, it is shown that programs of channels 4 and 6 are recorded with respect to six hours from PM 6:00 to AM 00:00 of the next day. The time zones and the channels are shown by portions surrounded with a thick line. In Fig. 10, each program name is omitted for the sake of simplicity.

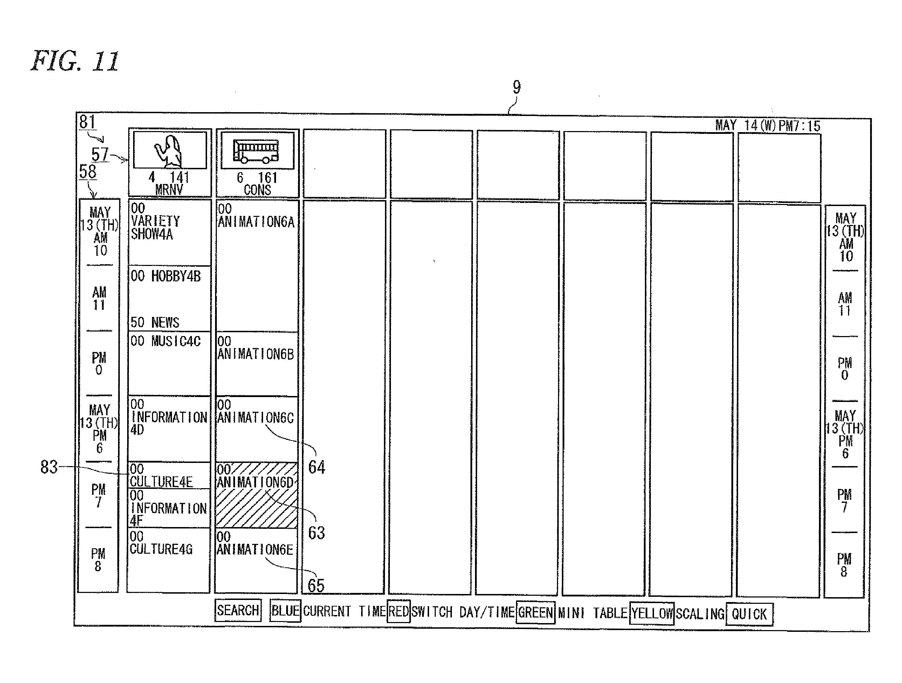

Fig. 11 exemplarily illustrates a program list 81 of recorded programs in the case where two channels are recorded. In Fig. 11, the hatched portions in the portions which are surrounded respectively by the thick lines in Fig. 10 are displayed. Six hours of a recording-designated time period is displayed on the time axis 58, and two of recording-designated channels 'i.e., channels 4 and 6) are displayed on the channel axis 57.

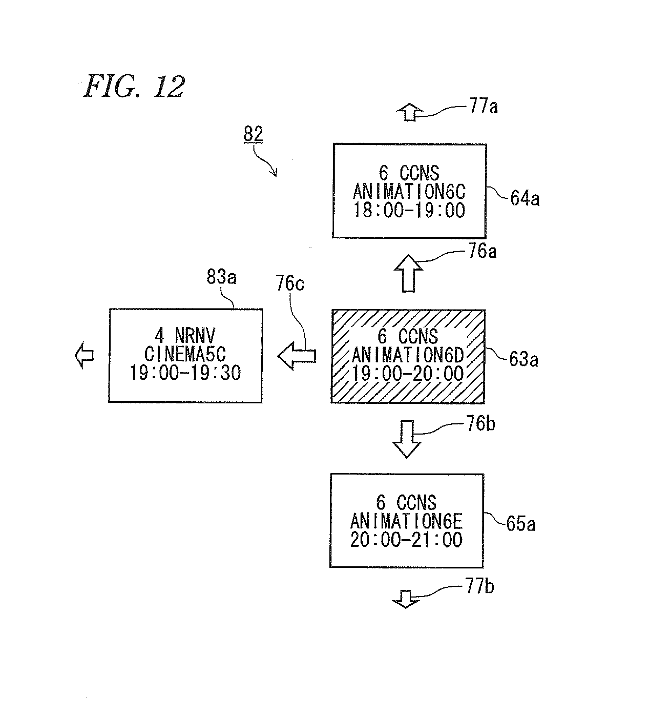

Fig. 12 exemplarily illustrates the adjacent program display 82 in the case where the number of channels of recorded programs displayed on the screen 9 is two. It is assumed that the currently-reproduced program is the program 63 in Fig. 11. The program information 63a (for example, the name of station, the name of the program, the broadcasting time, and the like) of the program 63 is placed in a center portion of the adjacent program display 82 while being highlighted. The program information 64a of the program 64 is placed above the program information 63a, the program information 65a of the program 65 is placed below the program information 63a, and program information 83a of a program 83 is placed on the left side of the program information 63a. In the case where the number of channels of recorded programs is two, the mark indicating that program information of a recorded program having a further smaller or larger channel number exists is not displayed.

(Embodiment 2)

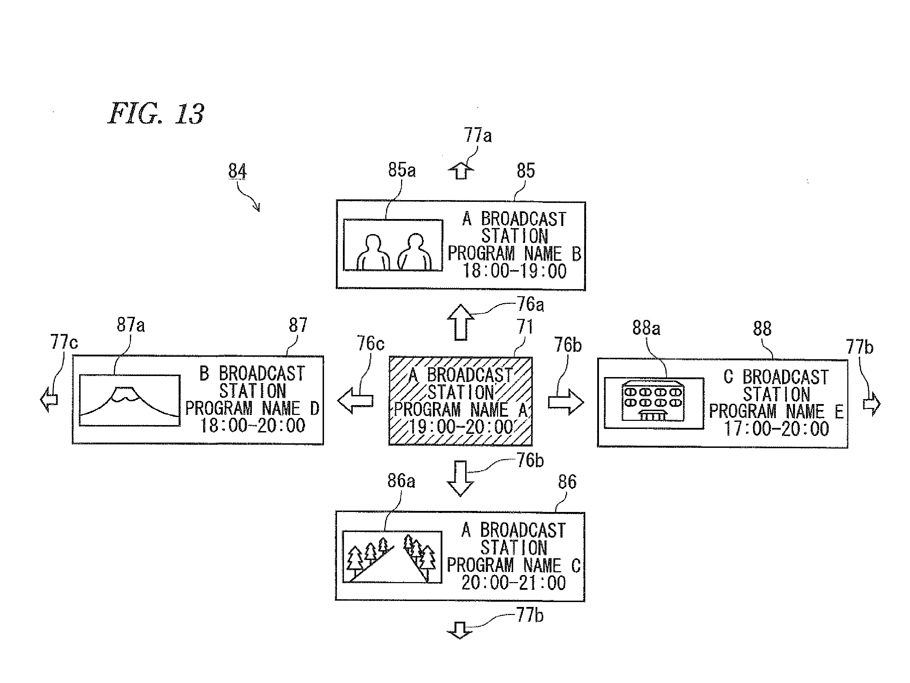

Fig. 13 exemplarily illustrates an adjacent program display in Embodiment 2. The components of Embodiment 2 which are identical with those of the digital broadcast receiver of Embodiment 1 shown in Fig. 1 are denoted by the same reference numerals. Embodiment 2 is different from Embodiment 1 in that, as shown in Fig. 13, thumbnails are added in program information of the time adjacent program and channel adjacent program in Embodiment 1 shown in Fig. 7, respectively. The thumbnails are motion images or still images.

A thumbnail 85a is included in program information 85 of the time adjacent program of an adjacent program display 84, a thumbnail 86a is included in program information 86 of the time adjacent program, a thumbnail 87a is included in program information 87 of the channel adjacent program, and a thumbnail 88a is included in program information 88 of the channel adjacent program. When the user performs zapping, the user can check a part of an image of the recorded program of the switching destination, in addition to character information, and hence this is convenient.

(Embodiment 3)

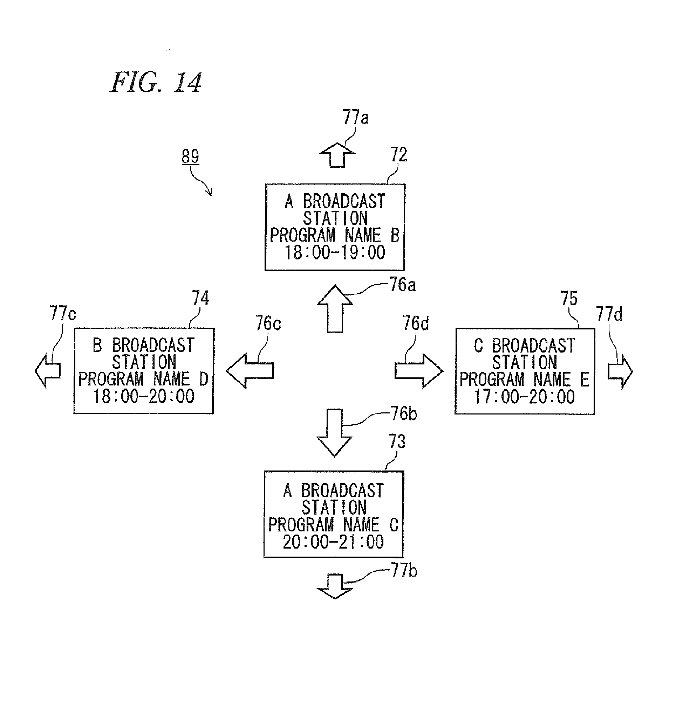

Fig. 14 exemplarily illustrates an adjacent program display in Embodiment 3. The components of Embodiment 3 which are identical with those of the digital broadcast receiver of Embodiment 1 shown in Fig. 1 are denoted by the same reference numerals. Embodiment 3 is different from Embodiment 1 in that the program information 71 of the currently-reproduced recorded program in Embodiment 1 shown in Fig. 7 is deleted as shown in Fig. 14. The deletion of the program information of the currently-reproduced program enables the size of an adjacent program display 89 to be reduced, and therefore the viewing region of the currently-reproduced program can be enlarged.

(Embodiment 4)

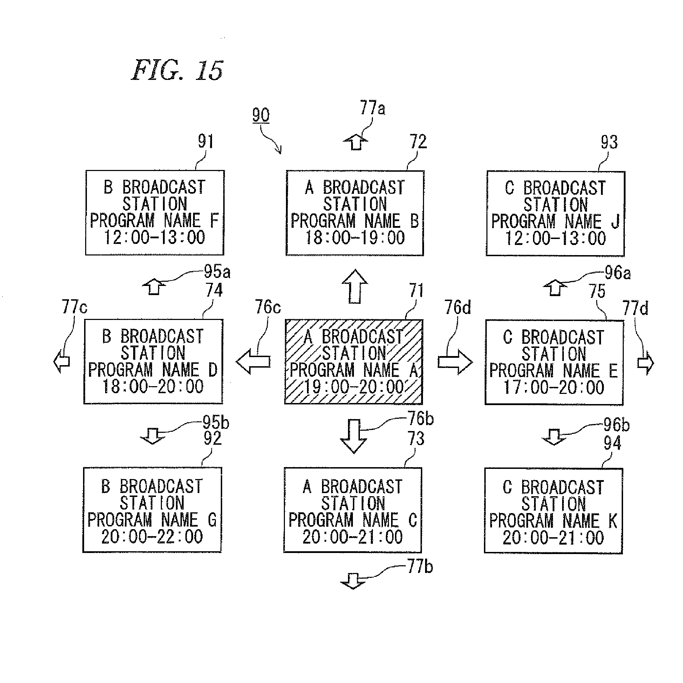

Fig. 15 exemplarily illustrates an adjacent program display in Embodiment 4. The components of Embodiment 4 which are identical with those of the digital broadcast receiver of Embodiment 1 shown in Fig. 1 are denoted by the same reference numerals. Embodiment 4 is different from Embodiment 1 in that, also with respect to a channel adjacent program, a time adjacent program of the channel adjacent program is added as shown in Fig. 15.

The adjacent program information receiving unit 25 searches program information of a channel adjacent program to receive meta information, and then searches program information of a time adjacent program of the channel adjacent program to receive meta information. The OSD data producing portion 26 produces OSD data of an adjacent program display 90, based on the meta information of the recorded program which is received by the adjacent program information receiving unit 25. The display controlling portion 27 displays the OSD data of the adjacent program display 90 on the screen 9. Program information of a maximum of eight adjacent programs can be displayed. Therefore, the selection range of the user can be expanded.

When the adjacent program display 90 is displayed on the screen 9, the program information 71 in the center is highlighted. When the cursor buttons 45a to 45d of the remote controller 40 are operated, the cursor is moved to the program information 72, 73, 74, or 75, so that the reproduced program can be switched. For program information 91, 92, 93, and 94 which are in oblique directions with respect to the program information 71, the cursor can be obliquely moved by using the touch pad portion 47 of the remote controller 40.

The cursor or the object to be selected can be moved by touching the surface of a touch pad portion 47 with the finger tip and by sliding the finger tip over the surface. By obliquely sliding the finger tip, the cursor or the object to be selected also can be moved obliquely.

The invention is not restricted to the above-described embodiments, and can be embodied by modifying the components without departing the spirit and the scope of the invention. For example, the components in the different embodiments may be combined, and some of the components may be omitted.

## Claims

1. A digital broadcast receiver, comprising:
a recorder configured to record programs of a record-designated channel for plural record-designated time zones;
an adjacent program information receiving unit configured to receive, in a same channel as a currently-reproduced recorded program, program information of a recorded program previous to the currently-reproduced recorded program, and program information of a recorded program subsequent to the currently-reproduced recorded program; and
a displaying unit configured to place, wholly or partially on a screen,
program information of the currently-reproduced recorded program in a center,
the program information of the previous recorded program in an upper side, and
the program information of the subsequent recorded program in a lower side.

2. A digital broadcast receiver, comprising:
a recorder configured to record programs of plural record-designated channels for a record-designated time zone;
an adjacent program information receiving unit configured to receive, in a same time zone as a currently-reproduced recorded program, program information of a recorded program having a channel number smaller than a channel of the currently-reproduced recorded program, and program information of a recorded program having a channel number larger than the channel of the currently-reproduced recorded program; and
a displaying unit configured to place, wholly or partially on a screen,
program information of the currently-reproduced recorded program in a center,
the program information of the recorded program having the smaller channel number in a left side, and
the program information of the recorded program having the larger channel number in a right side.

3. The digital broadcast receiver of Claim 1,
wherein, in a case where a recorded program further previous to the previous recorded program exists, the displaying unit displays a mark indicating that a further previous recorded program exists, above the program information of the previous recorded program.

4. The digital broadcast receiver of Claim 1,
wherein, in a case where a recorded program further subsequent to the subsequent recorded program exists, the displaying unit displays a mark indicating that a further subsequent recorded program exists, below the program information of the subsequent recorded program.

5. The digital broadcast receiver of Claim 2,
wherein, in a case where a recorded program having a channel number further smaller than the recorded program having the smaller number exists, the displaying unit displays a mark indicating that a recorded program having a further smaller channel number exists, in a left side of the program information of the recorded program having the smaller number.

6. The digital broadcast receiver of Claim 2,
wherein, in a case where a recorded program having a channel number further larger than the recorded program having the larger number exists, the displaying unit displays a mark indicating that a recorded program having a further larger channel number exists, in a right side of the program information of the recorded program having the larger number.

7. The digital broadcast receiver of Claim 1, further comprising:
a controlling unit configured to switch, in a case where the program information of the previous or subsequent recorded program is selected, a reproducing-subject program from the currently-reproduced recorded program to the previous or subsequent recorded program.

8. The digital broadcast receiver of Claim 2, further comprising:
a controlling unit configured to switch, in a case where the program information of the recorded program having the smaller or larger channel number is selected, a reproducing-subject program from the currently-reproduced recorded program to the recorded program having the smaller or larger channel number,

9. A recorded program display method, comprising:
recording programs of plural record-designated channels for plural record-designated time zones;
receiving, in a same channel as a currently-reproduced recorded program, program information of a recorded program previous to the currently-reproduced recorded program, and program information of a recorded program subsequent to the currently-reproduced recorded program;
receiving, in a same time zone as the currently-reproduced recorded program, program information of a recorded program having a channel number smaller than a channel of the currently-reproduced recorded program, and program information of a recorded program having a channel number larger than the channel of the currently-reproduced recorded program; and
placing, wholly or partially on a screen,
program information of the currently-reproduced recorded program in a center,
the program information of the previous recorded program in an upper side,
the program information of the subsequent recorded program in a lower side,
the program information of the recorded program having the smaller channel number in a left side, and
the program information of the recorded program having the larger channel number in a right side.
